# EUROPÄISCHE PATENTSCHRIFT

(11) **EP 2 278 172 B1**
(45) Veröffentlichungstag und Bekanntmachung des Hinweises auf die Patenterteilung: **28.12.2011**
(21) Anmeldenummer: 09405118.2
(22) Anmeldetag: 20.07.2009
(51) Int. Cl.: F16B 5/02, F16B 25/00

(54) **Vorrichtung zum Befestigen eines Bauelementes in einem Abstand**
Device for securing a construction element in a gap
Dispositif de fixation d'un élément de construction dans un espacement

(43) Veröffentlichungstag der Anmeldung: 26.01.2011
(73) Patentinhaber: Rogger Fasteners AG, 3257 Grossaffoltern (CH)
(72) Erfinder: Rogger, Adrian, 3250 Lyss (CH); Rogger, Marcel, 3257 Grossaffoltern (CH)
(74) Vertreter: Roshardt, Werner Alfred

(56) Entgegenhaltungen:
- EP-A1- 0 935 075
- US-A- 6 042 314

## Beschreibung

### Technisches Gebiet

Die Erfindung betrifft eine Vorrichtung zum Befestigen eines Bauelementes in einem Abstand zu einem tragenden Bauteil, umfassend einen Stift mit einem vorderen Gewinde an einem vorderen Endbereich des Stifts und einen Befestigungsabschnitt mit einem hinteren Gewinde, welches einen gegenüber dem ersten Gewinde grösseren Querschnitt aufweist. Weiter betrifft die Erfindung einen Gebäudeteil mit einer solchen Vorrichtung.

### Stand der Technik

Aus der EP 0 935 075 B1 (Rogger) ist eine Distanzschraube zum Befestigen eines Bauelementes in einem Abstand zu einem tragenden Bauteil bekannt. Die Distanzschraube umfasst einen Bolzen mit einem Gewinde an einem vorderen Ende des Bolzens und einem Befestigungsabschnitt am hinteren Ende mit einem gegenüber dem Gewinde grösseren Querschnitt. Der Befestigungsabschnitt ist durch einen mit dem Bolzen drehsicher verbundenen, aufgesetzten Mantelteil gebildet. Der Mantelteil besteht z. B. aus einem faserverstärkten Kunststoff und weist an seiner Aussenseite ein Gewinde auf, dessen Kerndurchmesser beträchtlich grösser sein kann als der Querschnitt des vorderen Gewindes. Weiter wird ein Dübel beschrieben, welcher einen Anschlagbund aufweist. Der Anschlagbund gewährleistet eine genaue Positionierung und verhindert, dass der Dübel weiter in das Bohrloch hineingeschoben werden kann. Der Durchmesser des Befestigungsabschnittes ist grösser als derjenige des Anschlagbundes. Infolgedessen ist eine Durchsteckmontage möglich.

Diese bekannte Distanzschraube kann dazu verwendet werden, eine Holzlatte (an welcher eine Fassadenplatte befestigt werden kann) in einem Abstand an einem Bauteil zu fixieren, so dass zwischen der Holzlatte und dem Bauteil eine Isolationsschicht angeordnet werden kann. Das hintere Gewinde der Distanzschraube eignet sich jedoch nicht zum Befestigen von Metallprofilen. Für eine solche Anwendung wird gemäss EP 0 935 075 B1 (Rogger) vorgeschlagen, auf das hintere Gewinde zu verzichten und stattdessen einen gewindefreien zylindrischen Befestigungsabschnitt mit einer Ringnut für einen Sprengring vorzusehen, so dass das Metallprofil mit einer Bohrung versehen werden kann, in die der Kopf der Distanzschraube eingeführt und mit dem Sprengring befestigt werden kann.

Diese Schraube hat sich in der Praxis bewährt. Allerdings ist sie für die Befestigung von Metallprofilen nicht geeignet. Die vorgeschlagene Massnahme zur Befestigung von Metallprofilen erweist sich im täglichen Gebrauch als deutlich weniger bequem als die Befestigung von Holzlatten.

Es sind diverse andere Schrauben bekannt, die aber andere Nachteile aufweisen.

Aus der EP 0 267 161 B1 (Spreiter) ist eine Schraube bekannt, bei welcher die Hülse mit dem Gewinde auf dem Kern der Schraube angeordnet ist. Die Hülse ist verdrehbar gegenüber dem Kern und kann sich in der Holzlatte selbst ein Gewinde bohren.

Mit der in der DE 90 15 403 U (Kössler) gezeigten Schraube werden Dämmstoffe an einem Untergrund fixiert. Der Untergrund ist z. B. ein tragendes Metallprofil. Die Schraube ist mit einem Kunststoffmantel als Korrosionsschutz umgeben. Der Schraubenkopf liegt auf einem Halteteller auf und ist im Bereich des Schraubenkopfs ohne Gewinde ausgeführt. Für die Befestigung eines Metallprofils in einem Abstand zu einem tragenden Untergrund ist diese Schraube nicht vorgesehen.

Die DE 37 15 420 A1 (Würth) offenbart eine Distanzschraube, mit welcher eine Holzlatte in einem Abstand zu einer Tragkonstruktion gehalten wird. Die Schraube besteht aus einem Bolzen mit einem Verankerungsgewinde und einer Hülse mit einem Kopfgewinde, wobei die beiden Teile drehfest miteinander verbunden sind. Auch diese Schraube ist nicht dazu geeignet, ein Metallprofil in einem Abstand zu einem Bauteil zu fixieren.

Eine andere, dem Oberbegriff von Auspruch 1 entsprechende Art von Schraube ist aus der US 6,042,314 (Windware) bekannt. Dieses Patent betrifft eine Befestigung zur Installation einer dünnen Lage Materials in einer verstellbaren Distanz zu einem stützenden Bauelement. Die Befestigung besteht aus einer Schraube mit einem Schraubenkopf am oberen Ende und einem ersten Gewinde am unteren Ende, wobei unterhalb des Schraubenkopfs ein Verankerungskragen konzentrisch um die Schraube angeordnet ist. Der Verankerungskragen kann spiralförmig ausgestaltet sein, wobei sich die Spiralform vom Kopf der Schraube in Richtung Schraubenspitze verjüngt. Die spiralförmige Ausführungsform ist allerdings viel teurer herzustellen als einfachere Formen der Verankerungskragen und daher nicht so erstrebenswert ("not as desirable").

Die bekannten Schrauben sind in der Praxis nicht zur Befestigung von Metallprofilen geeignet. Entsprechend werden auch heute noch überwiegend Konsolen beziehungsweise Metallwinkel verwendet, um Metallprofile in einem Abstand zu einem Bauteil zu befestigen. Diese sind aber relativ aufwändig in der Montage und haben insbesondere eine Kältebrücken-Wirkung, die bei hochisolierten Gebäuden (z. B. nach dem "Minergie®"-Standard) unerwünscht sind.

### Darstellung der Erfindung

Aufgabe der Erfindung ist es, eine dem eingangs genannten technischen Gebiet zugehörende Vorrichtung zu schaffen, welche die beim Stand der Technik vorhandenen Nachteile möglichst vermeidet und einfach und bequem in der Handhabung beziehungsweise in der Montage sind.

Die Lösung der Aufgabe ist durch die Merkmale des Anspruchs 1 definiert. Gemäss der Erfindung umfasst die Vorrichtung einen Stift mit einem vorderen Gewinde an einem vorderen Endbereich des Stifts und einen Befestigungsabschnitt mit einem hinteren Gewinde. Letzteres weist einen gegenüber dem vorderen Gewinde grösseren Querschnitt auf. Der Befestigungsabschnitt ist durch einen am Stift drehsicher aufgesetzten Mantelteil aus Metall mit einem Aussengewinde gebildet. Zudem ist am Stift eine Kunststoffhülle vorgesehen, welche sich in einen zwischen dem Mantelteil und dem Stift gebildeten Bereich erstreckt.

Der Vorteil der erfindungsgemässen Vorrichtung besteht darin, dass trotz stark unterschiedlichem Durchmesser des vorderen und des hinteren Gewindes die Herstellung der Schraube kostengünstig ist. Die Fertigung von zwei Einzelteilen aus Metall (Stift und Hülse) und die Verbindung über ein Kunststoffspritzgussteil ist wesentlich einfacher und/oder materialsparsamer, als die Fertigung einer einteiligen Distanzschraube der gleichen Geometrie. Mit dem gegenüber dem eingangs erwähnten Stand der Technik alternativen Aufbau des hinteren Schraubenteils werden weitere Anwendungsmöglichkeiten erschlossen. Die Schraube ist einfach handhabbar, insbesondere wenn der Anwender die bewährte Schraube gemäss EP 0 935 075 (Rogger) kennt. Im Vergleich mit anderen Befestigungsmethoden und insbesondere den weitverbreiteten Konsolen beziehungsweise Metallwinkeln, bildet die Distanzschraube ausserdem deutlich kleinere Kältebrücken.

Vorzugsweise reicht die Kunststoffhülle am Stift maximal bis zu dem vorderen Gewinde, wobei die Kunststoffhülle eine starre Verbindung zwischen Mantelteil und Stift schafft.

Insbesondere wenn der Kunststoff aufgespritzt wird, ergibt sich daraus der Vorteil, dass der zeitweise noch formbare Kunststoff den Mantelteil und den Stift passgenau umfasst. Die für eine dreh- und zugsichere Verbindung sorgenden Elemente an Mantelteil und Stift müssen daher weder in hoher Präzision gefertigt werden, noch aufeinander abgestimmt sein. Zudem ist der Rohstoff günstig und die Fertigungsmethode leicht anpassbar.

Vorzugsweise ist am Stift zwischen dem vorderen und dem hinteren Gewinde ein Gewindeschneider aus Metall ausgebildet. Der Gewindeschneider ist ein Metallgewindeschneider, welcher in ein Metallprofil (z. B. aus Aluminium), das eine Wandstärke von z. B. 1-3 mm hat, den Gewindegang für das hintere Gewinde der erfindungsgemässen Vorrichtung schneiden kann.

Das hat den Vorteil, dass am zu befestigenden Bauelement kein Gewinde bereitgestellt werden muss, was die Montage stark vereinfacht. Es genügt, wenn eine Bohrung vorgesehen ist, die so gross ist, dass die Distanzschraube bis vor dem Gewindeschneider hindurchgeschoben werden kann und dann einfach noch weitergedreht werden muss, bis auch das hintere Gewinde im Metallprofil sitzt.

Auf den Gewindeschneider kann auch verzichtet werden. Es könnte z. B. am Metallprofil ein dem hinteren Gewinde der Distanzschraube entsprechender Gewindegang vorgesehen sein.

Vorzugsweise weist der Gewindeschneider eine konische Form auf und hat eine Länge, die grösser als diejenige des hinteren Gewindes ist. Dabei ist die Länge vorzugsweise mindestens zweimal so gross wie diejenige des hinteren Gewindes.

Die konische Form des Gewindeschneiders hat den Vorteil, dass das Gewinde in kleinen Schritten sukzessiv in das Bauelement geschnitten wird, was besonders materialschonend ist. Auch eine grosse Länge des Gewindeschneiders führt dazu, dass das Gewinde in vielen kleinen Einzelschritten geschnitten wird, was zu denselben Vorteilen führt. Verspannungen und womöglich unschöne Verformungen des Bauelements können so vermieden werden und die Montage wird durch einen geringen Schneidwiderstand erleichtert. Der Schneidwiderstand spielt eine wichtige Rolle, weil ein kleiner Schneidwiderstand zum Beispiel den Einsatz eines elektrischen Schraubenziehers mit begrenzter Kraft (beziehungsweise Drehmomentbegrenzung) erlaubt. Der Schneidwiderstand ist dann vorteilhaft klein, wenn die Steigung der konischen Grundform gering und der Gewindeschneider lang ist.

Alternativ kann auch ein Gewindeschneider mit einer anderen z. B. zylindrischen oder parabolisch sich erweiternden Grundform verwendet werden. Die Schneidzähne brauchen nicht alle gleich stark aus der Grundform vorzustehen. Der Anfang des Gewindeschneiders kann z. B. mit niedrigeren Zähnen als das Ende desselben versehen sein. Als Variante kann auch ein kürzerer Gewindeschneider verwendet werden. Die Steilheit des Konus hängt vom Material und der Länge des Gewindegangs im Bauteil (z. B. im Metallprofil) ab.

Vorzugsweise ist die Kunststoffhülle länger als der Mantelteil aus Metall. Dies bedeutet, dass die Kunststoffhülle den Stift auch an Stellen neben dem Mantelteil umhüllt.

Das hat den Vorteil, dass der Stift auch an diesen Stellen vor Korrosion geschützt ist. Dies ist besonders im Hinblick auf teilweise aggressive Isolationsmaterialien wichtig.

Als Variante kann die Kunststoffhülle auch gleich lang oder kürzer als der Mantelteil sein. Sie könnte z. B. nur unter dem Mantelteil aus Metall vorhanden sein. Der Korrosionsschutz könnte durch eine separate Hülle sichergestellt werden, die eventuell auch nachträglich an der Distanzschraube angebracht werden könnte.

Vorzugsweise ist ein mantelseitiger Übergang zwischen dem Mantelteil aus Metall und der Kunststoffhülle, in Längsrichtung betrachtet, stufenlos.

Ein stufenloser Übergang zwischen Mantelteil und Kunststoffhülle hat den Vorteil, dass bei Montage und Demontage nichts an Kanten oder Überhängen hängenbleiben kann. Zudem wird durch diesen Übergang eine Schulter an der Kunststoffhülle gebildet, welche zur axialen Fixierung des metallischen Mantelteils dient.

Als Variante kann der Übergang rampenförmig oder stufig ausgebildet sein. Bildet die Kunststoffhülle keine Schulter zum Mantelteil, muss dessen axiale Fixierung entweder durch andere Ausformungen der Kunststoffhülle oder zusätzliche Massnahmen gewährleistet werden.

Vorzugsweise weist der Stift im Bereich des Mantelteils ein Gewinde zur Sicherung einer starren Verbindung mit der Kunststoffhülle auf. Das Gewinde ist in Längsrichtung des Stifts, vorzugsweise durch mindestens eine Rinne, unterbrochen.

Ein Gewinde hat den Vorteil einer grossen totalen Kantenfläche, was im Fall einer Verbindung eine gute Zugfestigkeit zur Folge hat. Zudem ist ein Gewinde einfach herzustellen. Ist ein Gewinde zusätzlich noch in Längsrichtung unterbrochen, kann darin befindliches Material eine Drehung des Gewindes verhindern. Der Unterbruch eines Gewindes gestaltet sich besonders in Längsrichtung als sehr einfach. Ein solches unterbrochenes Gewinde ermöglicht auf einfache Weise eine starre, zug- und drehfeste Verbindung.

Als Variante kann ein Gewinde in beliebiger Richtung unterbrochen sein oder anstatt eines Unterbruchs zum Beispiel mindestens eine Rippe als Drehsicherung beinhalten. Alternativ zu einem Gewinde kann auch fast jede beliebige Anordnung von Vertiefungen und Erhebungen, Rippen und Rillen, Kanten und Überhängen und dergleichen als Dreh- und Zugsicherung dienen. Eine andere Alternative wäre eine Dreh- und Zugsicherung durch einen durch beide Teile führenden Bolzen oder ähnliches.

Vorzugsweise hat das hintere Gewinde nicht mehr als fünf Windungsumläufe.

Dies hat den Vorteil, dass eine für die starre Verbindung eines Bauelementes mit einem Bauteil ausreichende Kraft aufgewendet werden kann, ohne dass das Gewinde unnötig lange ausgestaltet ist. Das erlaubt eine kompakte, einfache und kostenoptimierte Bauweise.

Alternativ kann das Gewinde von beliebiger Länge sein.

Vorzugsweise ist der Gewindeschneider durch ein Gewinde gebildet, welches in Längsrichtung des Stifts in mehrere, insbesondere vier Sektoren, unterteilt ist.

Unterbrüche des Gewindeschneiders in Längsrichtung haben den Vorteil, dass das beim Gewindeschneiden anfallende Material abtransportiert werden kann. Je häufiger und grösser ein Gewindeschneider unterbrochen ist, desto mehr Material lässt sich abtransportieren. Allerdings bleibt bei zunehmender Anzahl und Grösse der Unterbrüche immer weniger Platz für die Schneidzähne des Gewindeschneiders. Vier Unterbrüche haben sich als guter Kompromiss herausgestellt und sind im Fall einer regelmässigen Anordnung, wie zum Beispiel in Form von Längsnuten, auch besonders einfach anzubringen.

Als Variante kann jede andere beliebige Zahl an Unterbrüchen in beliebiger Form verwendet werden oder es kann ganz auf sie verzichtet werden.

Vorzugsweise weist der Gewindeschneider eine Mehrzahl von Schneidzähnen auf, deren Freiflächen rampenförmig aus dem glatten Bereich des Mantelteils herausstehen.

Die Rampenform der Freiflächen hat den Vorteil, dass das abzutragende Material gleichmässig entfernt wird. Weiter ist eine rampenförmige Freifläche ziemlich einfach herzustellen. Ist eine Mehrzahl von Schneidzähnen vorhanden, kann das Gewinde in mehreren Schritten geschnitten werden. Ein gleichmässiges Gewindeschneiden in mehreren Schritten ist besonders materialschonend und daher besonders vorteilhaft.

Als Variante kann auch nur ein einziger fortlaufender Schneidzahn verwendet werden, und auch die Form der Steigung kann frei gewählt werden (zum Beispiel progressiv oder regressiv oder auch willkürlich oder stufenweise ansteigend).

Vorzugsweise befindet sich zwischen Mantelteil und dem Kopf des Stifts ein Teil der Kunststoffhülle.

Auf diese Weise können Fertigungstoleranzen im Durchmesser des Kopfs des Stifts kompensiert werden. Auch wenn nur eine dünne Schicht der Kunststoffhülle zwischen Mantelteil und Kopf des Stifts ausgebildet wird, so erlaubt die Flexibilität deren Herstellungsprozesses die Verwendung von kostengünstig produzierten Stiften mit relativ grossen Fertigungstoleranzen.

Alternativ kann der Mantelteil auch direkt auf dem Kopf des Stifts anliegen.

Vorzugsweise umfasst die Vorrichtung einen Kunststoffdübel für das vordere Gewinde, wobei eine Länge des Kunststoffdübels mindestens so gross ist, dass der Kunststoffdübel einen von der Kunststoffhülle nicht abgedeckten Bereich des Stifts abdeckt.

Der Vorteil eines solchen Dübels liegt darin, dass der Metallstift von der Spitze der Distanzschraube bis zum Bauelement komplett eingehüllt ist. Der Metallstift ist somit vor Kontakt mit eventuell aggressivem Isolationsmaterial und damit vor Korrosion geschützt.

Alternativ kann ein beliebig langer Dübel verwendet werden. Der Metallstift kann zum Beispiel durch eine Oberflächenbehandlung, durch die Wahl eines nichtkorrosiven Metalls oder durch eine separat aufgebrachte Schutzschicht vor Korrosion bewahrt werden. Als Variante kann man auch gänzlich auf einen Korrosionsschutz verzichten.

Vorzugsweise ist der sichtbare Teil der Kunststoffhülle zweistufig ausgebildet und weist eine rechtwinklige Schulter auf, wobei der dickere sichtbare Teil am Mantelteil endet.

Ein vorderer Teil der Kunststoffhülle muss in den Dübel passen und daher eher dünn ausgestaltet sein, und ein hinterer Teil der Kunststoffhülle muss hingegen genug dick sein, damit zwischen Kunststoffhülle und Mantelteil kein Stufenübergang entsteht. Die einfachste Art, diese Bedingungen zu erfüllen, ist eine zweistufige Ausbildung der Kunststoffhülle. Die Ausbildung einer rechtwinkligen Schulter vereinfacht und verbilligt die Produktion.

Als Variante kann man beliebige anders ausgeformte Übergange herstellen, um die nötige Verbreiterung des Durchmessers der Kunststoffhülle zu erreichen. Der Übergang kann z. B. aus einer geraden Steigung bestehen oder einer Steigung, deren Steilheit zunehmend zu-oder abnimmt. Auch unregelmässige Formen eines Übergangs sind denkbar.

Vorzugsweise weist der Mantelteil eine Innenseite mit in Längsrichtung verlaufenden Rippen auf.

Solche Rippen haben den Vorteil, dass der Mantelteil dadurch drehsicher mit der Kunststoffhülle verbunden werden kann.

Alternativ zu solchen Rippen kann auch fast jede beliebige Anordnung von Vertiefungen und Erhebungen, Gewinde und Rillen, Kanten und Überhängen und dergleichen als Drehsicherung dienen. Eine andere Alternative wäre eine Drehsicherung durch einen durch beide Teile führenden Bolzen oder ähnliches. Es kann auch auf eine Drehsicherung verzichtet werden, oder es reichen bereits die vorhandenen Bindungskräfte von Mantelteil und Kunststoffhülle.

Vorzugsweise besteht die Anordnung aus einem Gebäudeteil mit einem tragenden Bauteil, einer Isolationsschicht, welche am tragenden Bauteil fixiert ist, einem Metallprofil, welches aussenseitig an der Isolationsschicht gehalten ist und einer erfindungsgemässen Vorrichtung der oben beschriebenen Art. Diese Vorrichtung befestigt das Metallprofil durch die Isolationsschicht hindurch am tragenden Bauteil, wobei das vordere Gewinde eine Verankerung der Vorrichtung im tragenden Bauteil sicherstellt und das hintere Gewinde eine Verbindung mit dem Metallprofil schafft, so dass dieses aussenseitig an der Isolationsschicht gehalten ist.

Diese Anordnung ist eine besonders vorteilhafte Kombination verschiedener Elemente, bei welcher die meisten oder alle Eigenschaften der beschriebenen Befestigungsvorrichtung ausgenutzt werden können. Eine kostengünstige Befestigungsvorrichtung fixiert ein Metallprofil in einem festgelegten Abstand zu einem Gebäudeteil, wobei eine Isolationsschicht dazwischen liegt. Für eine einfache und schnelle Montage wird das Durchsteckmontageverfahren verwendet.

Das solchermassen befestigte Metallprofil weist dann einen definierten Abstand zum Gebäudeteil auf. Die Befestigungsvorrichtung ist dabei vor Korrosion, durch eventuell aggressive Isolationsmaterialien, geschützt. Gerade beim Bau von Gebäudefassaden ist eine solche kostengünstige, schnell und einfach montierte Befestigungslösung von grossem Vorteil.

In vielen der zahllosen Varianten zur Befestigung von Gebäudefassaden finden z. B. Distanzwinkel Verwendung, was die Montage des Metallprofils kompliziert macht und vergleichsweise grosse Kältebrücken bildet. Kältebrücken innerhalb der Isolationsschicht sollten aber womöglich vermieden werden, was durch die beschriebene vorteilhafte Befestigungsvorrichtung ebenfalls erreicht wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine erfindungsgemässe Befestigung eines Bauelementes an ein Bauteil;
- Fig. 2.1 - 2.3: schematische Darstellungen der erfindungsgemässen Schraube von oben sowie in zwei Schnittebenen;
- Fig. 3: eine schematische Darstellung des Mantelteils in Seitenansicht;
- Fig. 4: eine schematische Darstellung des Mantelteils von unten;
- Fig. 5.1 - 5.3: schematische Darstellungen des Mantelteils von oben, von unten und in einer Schnittebene;
- Fig. 6.1 - 6.3: schematische Darstellungen eines Metallprofils von der Seite und von oben.

Grundsätzlich sind in den Figuren gleiche Teile mit gleichen Bezugszeichen versehen.

### Wege zur Ausführung der Erfindung

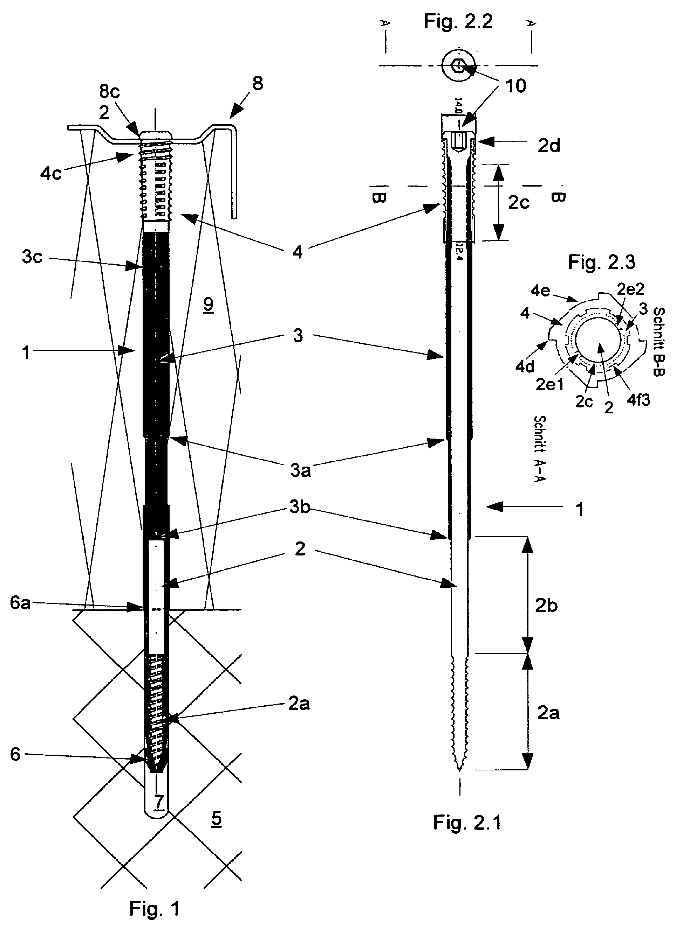

Fig. 1 zeigt eine erfindungsgemässe Befestigung eines Metallprofils 8 an einem Bauteil 5. In diesem Ausführungsbeispiel ist das Bauteil 5 eine Betonwand und das Metallprofil 8 ein Fassadenunterkonstruktionsprofil aus Aluminium. Am Fassadenunterkonstruktionsprofil kann die (nicht dargestellte) Fassadenverkleidung in an sich bekannter Weise befestigt werden.

In einem Loch 7 im Bauteil 5 steckt ein Dübel 6. Die erfindungsgemässe Distanzschraube 1 verfügt an ihrer Spitze über ein Gewinde 2a, welches in den Dübel 6 eingeschraubt ist.

An dem der Spitze gegenüberliegenden Ende der Distanzschraube 1 befindet sich ein Mantelteil 4, auf dem ein Gewinde 4c ausgebildet ist. Das Bauelement 8 ist über das Gewinde 4c fest mit der Distanzschraube 1 verschraubt. Die Distanzschraube 1 wiederum ist über das Gewinde 2a fest mit dem Dübel 6 und dadurch mit dem Bauteil 5 verbunden. Somit ist das Bauelement 8 mit dem Bauteil 5 in einem wohldefinierten Abstand durch die Distanzschraube 1 fest verbunden.

Der Mantelteil 4 geht stufenlos in eine Kunststoffhülle 3 über, welche einen Metallstift 2 umschliesst und sich in Richtung der Spitze der Distanzschraube 1 fortsetzt. Zwischen dem Ende der Kunststoffhülle 3 und dem Gewinde 2a befindet sich ein gewindefreier Teil 2b des Metallstifts 2 (vgl. Fig. 2.1). Ist die Distanzschraube 1 fertig montiert, kommt dieser gewindefreier Teil 2b vollständig in den Dübel 6 zu liegen. Da sich der Dübel 6 und die Kunststoffhülle 3 überlappen, ist die Spitze des Metallstifts 2 sowie seine ganze Oberfläche bis hin zum Bauelement 8 eingehüllt. Im vorliegenden Beispiel ist nur ein Teil des Kopfs 2d ohne Kunststoffhülle.

Dies ist insbesondere dann sehr vorteilhaft, wenn sich, wie in diesem Ausführungsbeispiel zwischen dem Bauelement 8 und dem Bauteil 5, eine Isolationsschicht 9 befindet. Isolationsmaterial kann gegenüber Metall aggressiv sein und der eingehüllte Metallstab 2 ist somit vor Korrosion geschützt. In diesem Ausführungsbeispiel beträgt die Länge von Mantelteil 4, Gewinde 2a und gewindefreiem Teil 2b etwa je ein Sechstel der Gesamtlänge der Distanzschraube 1. Der Dübel 6 sowie der Teil der Kunststoffhülle 3 zwischen gewindefreiem Teil 2b und dem Mantelteil 4 weisen beide eine Länge von etwa drei Fünftel der Distanzschraube 1 auf. Der Dübel 6 und die Kunststoffhülle 3 überlappen sich typischerweise auf einer Strecke von einigen wenigen Zentimetern (z. B. von weniger als 5 cm).

Eine abgeflachte Schulter 3b am Ende der Kunststoffhülle 3 beim Übergang zum gewindefreien Teil 2b erleichtert bei der Montage das Einführen der Kunststoffhülle 3 in den Dübel 6. Die Kunststoffhülle 3 ist derart proportioniert,dass sie nie so tief in den Dübel 6 eindringen kann, dass eine an der Kunststoffhülle 3 ausgeformte Schulter 3a am Dübel 6 anstösst. Der Dübel 6 handkehrum besitzt einen Anschlagbund 6a, der am Bauteil 5 anstossen kann und so eine maximale Einbautiefe des Dübels 6 in das Bauteil 5 festlegt. An einer Skala 3c, die an der Kunststoffhülle 3 angebracht ist, kann die Einschraubtiefe der Distanzschraube 1 abgelesen werden. Ist der Dübel 6 bis zum Anschlag in das Bauteil 5 eingeschoben und ist die Distanzschraube 1 darin eingesetzt, so sollte das Bauelement 8 auf Höhe der dicken, breiten Markierung in der Mitte der Skala 3c zu liegen kommen. So kann die Fixierung des Bauelements 8 im festgelegten Abstand zum Bauteil 5 gewährleistet werden.

In der vorliegenden Ausführungsform hat das Loch 7 im Bauteil 5 einen Durchmesser von ca. 10 mm, der Dübel 6 hinter dem Anschlagbund 6a einen Durchmesser von 11 mm.

Fig. 2.1 zeigt die vorliegende Ausführungsform der Distanzschraube 1 in Seitenansicht entlang der Schnittebene A-A (vgl. Fig. 2.2). Die Distanzschraube 1 setzt sich aus dem Metallstift 2, der Kunststoffhülle 3 und dem Mantelteil 4 zusammen. Im vorliegenden Ausführungsbeispiel liegt die Gesamtlänge der Distanzschraube im Bereich von 25 - 30 cm (z. B. bei 27.5 cm).

Der Metallstift 2 bildet einen durchgehenden Kern der Distanzschraube 1 und weist an seiner Spitze das Gewinde 2a auf. Die Länge des Gewindes 2a beträgt typischerweise einige Zentimeter (im vorliegenden Fall etwa 5 cm) und ist etwas kleiner als die erforderliche Einschraubtiefe (im vorliegenden Fall etwa 6 bis maximal 8 cm) in ein Bauteil 5. Das Gewinde kann gleich ausgeführt sein wie beim Stand der Technik gemäss EP 0 935 075 A1.

Auf das Gewinde 2a folgt ein gewindefreier Teil 2b des Metallstifts 2. Sein Durchmesser ist gleich gross oder um eine Toleranz grösser als der Aussendurchmesser des Gewindes 2a und beträgt in diesem Ausführungsbeispiel etwa 7 mm. Dadurch wird gewährleistet, dass der gewindefreie Teil 2b in den Dübel 6 versenkt werden kann. Der im Dübel 6 versenkte Abschnitt des gewindefreien Teils 2b stützt die Distanzschraube 1 im Dübel 6 und dadurch auch im Bauteil 5. Der gewindefreie Teil 2b endet an der abgeflachten Schulter 3b der Kunststoffhülle 3. Unter der Kunststoffhülle 3 liegt ein weiteres auf dem Metallstift 2 ausgebildetes Gewinde 2c. Das weitere Gewinde 2c dient dazu, eine dreh- und zugsichere Verbindung zur Kunststoffhülle 3 zu gewährleisten. Das weitere Gewinde 2c ist in Längsrichtung des Stifts durch mindestens eine Rinne 2e durchbrochen (vgl. Fig. 2.3). Im vorliegenden Ausführungsbeispiel liegt das Gewinde 2c an dem der Spitze gegenüberliegenden Ende des Metallstifts 2. Es ist 4 cm lang und durch beispielsweise 2 Rinnen durchbrochen. Hinter dem Gewinde 2c schliesst der Metallstift 2 in einem Kopf 2d ab, welcher z. B. mit einem Innensechskant 10 versehen ist.

Die Kunststoffhülle 3 umschließt den Metallstift 2 in der Art eines Mantels. Ein Ende der Kunststoffhülle 3 ragt in den Dübel 6 hinein und weist einen Aussendurchmesser auf, der dem Innendurchmesser des oberen Teils des Dübels 6 entspricht (hier z. B. 9 mm). Die Kunststoffhülle 3 ist zweistufig ausgebildet und formt eine Schulter 3a. Die Kunststoffhülle 3 geht dann im hinteren Teil der Distanzschraube 1 stufenlos in den Mantelteil 4 über und weist dort einen Durchmesser von 10 mm auf. Die kombinierte Länge der Kunststoffhülle 3, des Mantelteils 4 und des Dübels 6 korrespondiert mit dem zu überbrückenden Abstand zwischen einem Bauelement 8 und dem Bauteil 5.

Fig. 2.2 zeigt die Distanzschraube 1 von oben und illustriert den Verlauf der Schnittebene A-A von Fig. 2.1. Der Kopf 2d des Metallstifts 2 hat im vorliegenden Beispiel an seinem breitesten Abschnitt einen Durchmesser von 14 mm und enthält den Innensechskant 10. Der Querschnitt beziehungsweise Durchmesser des Kopfs 2d ist grösser als derjenige des Dübels 6 und der Kunststoffhülle 3. Der Durchmesser von Gewinde 4c und Gewindeschneider 4b ist ebenfalls grösser als derjenige der Kunststoffhülle 3 und des Dübels 6.

Fig. 2.3 zeigt die Distanzschraube entlang der Schnittebene B-B (vgl. Fig. 2.1). Der Mantelteil 4 weist vier Schneidzähne 4d und vier Längsnuten 4e zum Gewindeschneiden auf. Als Drehsicherung gegenüber der Kunststoffhülle 3 hat der Mantelteil 4 sechs Rippen 4f1 - 4f6 und der Metallstift 2 zwei Rinnen 2e1, 2e2 ausgebildet. Aus Platzgründen ist von den sechs Rippen 4f1 - 4f6 allerdings nur die Rippe 4f3 angeschrieben. Zur Zugsicherung gegenüber der Kunststoffhülle 3 dient dem Metallstift das Gewinde 2c.

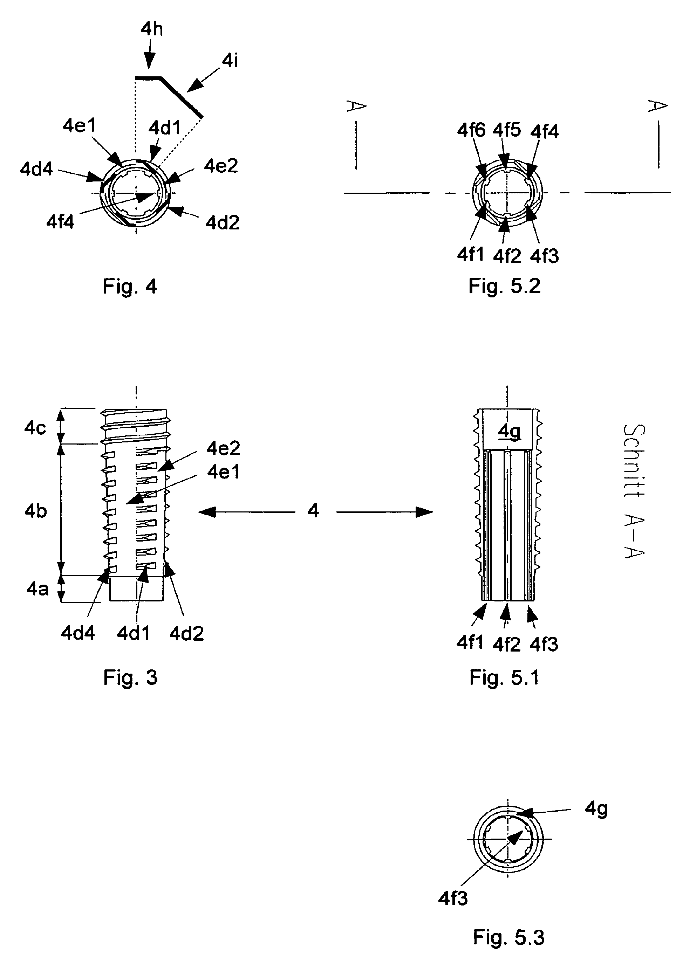

Fig. 3 zeigt den Mantelteil 4 in Seitenansicht. Der Mantelteil 4 ist aus drei Abschnitten zusammengesetzt: Einem gewindefreien Abschnitt 4a, einem Gewindeschneider 4b und dem Gewinde 4c. Der Mantelteil 4 hat eine konische Form mit einer flachen Steigung. Auf einer Gesamtlänge von 4.3 cm vergrössert sich dabei sein Durchmesser von 10 mm beim kleinen Ende des gewindefreien Abschnitts 4a auf 12 mm Kerndurchmesser des Gewindes 4c. Anders gesagt nimmt der Durchmesser der konischen Form pro Umdrehung des Gewindeschneiders (3 mm) um 0.1 mm zu. Dies ergibt einen Öffnungswinkel der konischen Form in der Grössenordnung von 1 bis 5 Grad (hier 2 Grad). Die Steigung des Gewindes 4c, des Mantelteils und des Gewindeschneiders 4b entspricht der Steigung des vorderen Gewindes 2a, damit während einer Schraubbewegung derselbe Vorschub geleistet wird. In dieser Ausführungsform ist der gewindefreie Abschnitt 4a 8 mm lang, der Gewindeschneider 4b 28 mm lang und das Gewinde 4c 7 mm lang, d. h. der Gewindeschneider 4b ist ein mehrfaches (z. B. drei bis vierfaches) länger als der gewindefreie Abschnitt 4a beziehungsweise als das Gewinde 4c.

Der Gewindeschneider 4b ist durch ein Gewinde gebildet, welches in Längsrichtung des Stifts 2 in vier Sektoren unterteilt ist. Der Gewindeschneider 4b verfügt dadurch in Längsrichtung des Stifts 2 über vier Schneidzahnreihen 4d 1 - 4d4, welche rampenförmig aus dem Mantelteil 4 herausstehen. Die Schneidzzahnreihen 4d1 - 4d4 sind durch vier Längsnuten 4e1 - 4e4 getrennt, über welche das beim Gewindeschneiden anfallende weggeschnittene Material abtransportiert werden kann.

Fig. 4 zeigt den Mantelteil 4 von unten. Pro Windungsumlauf sind vier Schneidzähne der Schneidzahnreihen 4d1 - 4d4 ausgebildet, welche durch vier Längsnuten 4e1 - 4e4 getrennt sind. Wie in der Vergrösserung der Schneidzahnreihe 4d1 dargestellt ist, bestehen die Schneidzähne aus einem Zahnrücken 4h und einer Freifläche 4i. Die Freiflächen 4i steigen über etwas weniger als ein Achtel des Mantelteil-Umfangs (hier ca. 4 mm) vom Mantel zum Zahnrücken 4h (hier ca. 1 mm) an, d.h. sie sind relativ flach.

Um eine verdrehsichere Verbindung des Mantelteils 4 zur Kunststoffhülle 3 zu gewährleisten, sind auf der Innenseite des Mantelteils sechs Rippen 4f1 - 4f6 hexagonal in Längsrichtung angebracht. Die Zugsicherheit der Verbindung ist dadurch gewährleistet, dass der Mantelteil hinten am Kopf 2d des Metallstifts anliegt und gegen vorne bündig in die Kunststoffhülle übergeht.

Fig. 5.1 zeigt einen seitlichen Schnitt des Mantelteils 4 in einer Ebene A-A in Fig. 5.2. Die Rippen 4f1 - 4f6 verlaufen vom kleineren Ende des konischen Mantelteils 4 in Richtung des grösseren Endes. Die Rippen 4f1 - 4f6 enden zu Beginn einer Aussparung 4g. Die Aussparung 4g dient dazu, einen Teil des Kopfs 2d des Metallstifts 2 aufzunehmen. Je nach Fertigungstoleranz des Kopfs 2d befindet sich zwischen Mantelteil 4 und der Aussparung 4g nur noch eine dünne Schicht der Kunststoffhülle 3. Im Extremfall eines Kopfs 3 mit grossem Durchmesser kann der Mantelteil 4 auch direkt auf den Kopf 3 zu liegen kommen. So ist der ganze oder zumindest der grösste Teil des Mantelteils 4 mit der Kunststoffhülle 3 verbunden, welche wiederum mit dem Metallstift 2 verbunden ist. Da die Kunststoffhülle 3 auf den Metallstift 2 aufgespritzt wird, sind im Prinzip Anpassungen verschiedener Dimensionen möglich, ohne dass der Herstellungsaufwand entsprechend in die Höhe getrieben wird. Zudem ist der Metallstift 2 durch die Kunststoffhülle 3 (und den Dübel 6) vor Korrosion geschützt.

Fig. 5.2 illustriert den Verlauf der Schnittebene A-A bezüglich des Mantelteils 4 von unten. Die sechs Rippen 4f1 - 4f6 sind hier einzeln bezeichnet. Fig. 5.2 ist abgesehen von einer leichten Drehung identisch mit Fig. 4, wo weitere Details beschrieben sind.

Fig. 5.3 zeigt den Mantelteil 4 von oben. Die Aussparung 4g ist als Ring sichtbar, und auch die sechs Rippen 4f 1-4f6 sind klar zu erkennen.

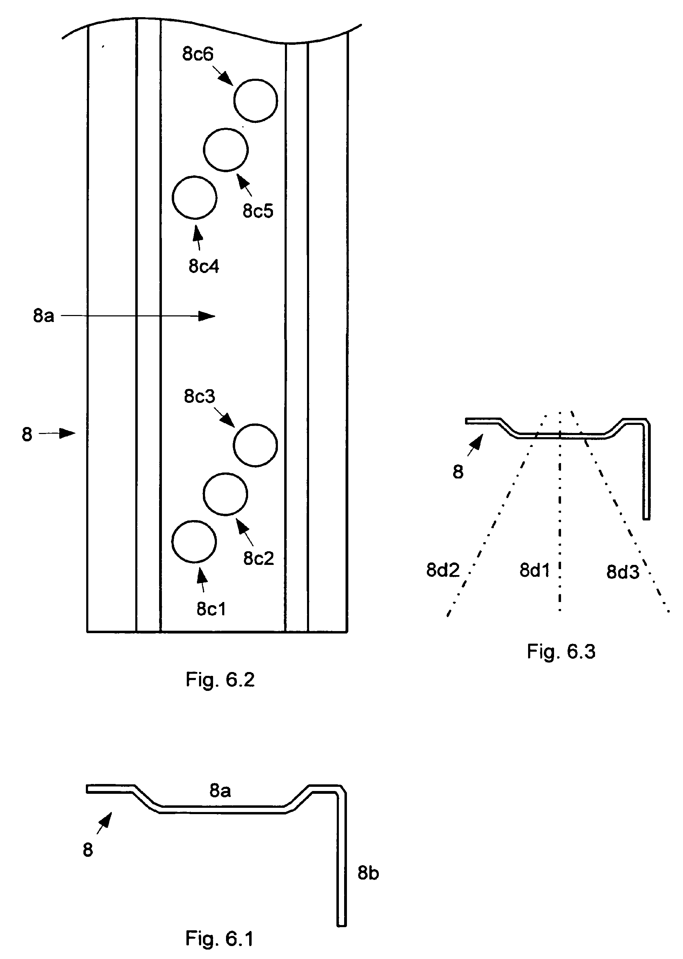

Fig. 6.1 zeigt eine Seitenansicht des im Grundsatz L-förmigen Metallprofils 8, welches in Längsrichtung gerade verläuft. Im Querschnitt betrachtet hat das Metallprofil 8 in der Mitte eine wannenförmige Vertiefung 8a und auf der einen Seite einen rechtwinklig abstehenden Schenkel 8b. Die Gesamtbreite des Metallprofils 8 beträgt etwa 70 bis 80 mm, die Vertiefung 8a und der Schenkel 8b sind jeweils nur ca. halb so breit bzw. halb so breit.

In Fig. 6.2 ist dasselbe Metallprofil 8 von oben abgebildet; die Vertiefung 8a weist in regelmässigen Abständen Gruppen von Löchern 8c1 - 8c6 auf. In diesem Ausführungsbeispiel besteht eine Gruppe aus jeweils drei diagonal versetzten Löchern 8c 1 - 8c3 bzw. 8c4 - 8c6 (d. h. die drei Löcher sind jeweils auf einer schräg zur Längsachse des Metallprofils verlaufenden Linie angeordnet). Die Löcher 8c1 - 8c6 besitzen einen Durchmesser von etwa 12.5 mm, und alle Löcher einer Dreiergruppe sind regelmässig über die ganze Breite der Vertiefung 8a verteilt.

Fig. 6.3 illustriert die Verwendung der Löcher 8c1 - 8c6, indem sie in der Seitenansicht des Metallprofils 8 die Schraubrichtungen 8d 1 - 8d3 gestrichelt aufzeigt. Die Distanzschraube 1 kann in alle Löcher 8c1 - 8c6 eingeschraubt werden, gerade oder schräg mit einem Winkel von maximal 25 Grad. Bevorzugt wird aber bei geradem Einschrauben das mittlere Loch 8c2 bzw. 8c5 einer Dreiergruppe verwendet, was einer Schraubrichtung 8d1 entspricht und eine mittige Positionierung der Distanzschraube 1 im Metallprofil 8 und dadurch eine optimale Druckverteilung ermöglicht. Bei einer Verschraubung in der Art einer Fachwerkverschraubung werden die Distanzschrauben 1 aber schräg gesetzt, und dafür werden bevorzugt die äusseren Löcher einer Dreiergruppe verwendet: nach links in einer Schraubrichtung 8d2 schraubend benutzt man vorzugsweise die linken Löcher 8c 1 bzw. 8c4, nach rechts in einer Schraubrichtung 8d3 schraubend die rechten Löcher 8c3 bzw. 8c6. Idealerweise werden pro Dreiergruppe Löcher dann zwei Distanzschrauben 1 verwendet, und die diagonale Anordnung der Löcher 8c1 - 8c6 innerhalb der Dreiergruppe gewährleistet eine genügend grossen Abstand der Distanzschrauben 1 und eine gute Verteilung der Zugkräfte.

Zur Montage des Metallprofils 8 wird wie nachfolgend beschrieben vorgegangen (Durchsteckmontageverfahren).

Vorauszuschicken ist, dass das Metallprofil 8 mit passenden Löchern 8c1 - 8c6 von ca. 12.5 mm Durchmesser versehen ist. Das heisst, der Durchmesser der Löcher 8c 1 - 8c6 ist ausreichend gross, um die Befestigungsvorrichtung 1, mit auf der Spitze aufgesetztem Dübel 6, bis zum Gewindeschneider 4b hindurchzuführen. Der Durchmesser der Löcher 8c1 - 8c6 ist sogar genügend gross, dass man die Befestigungsvorrichtung 1 auch bis zu maximal 25 Grad schräg setzen kann. Das erlaubt den Einsatz der Befestigungsvorrichtung 1 und des Metallprofils 8 in der Art einer sogenannten Fachwerkverschraubung (siehe Stand der Technik gemäss EP 1 512 875 A1 oder WO 2006/122902). Der Durchmesser der Löcher soll jedoch kleiner als der maximale Aussendurchmesser des Gewindeschneiders sein. Der Durchmesser der Löcher ist grösser als der minimale Durchmesser des Befestigungsabschnitts auf dem Boden des Gewindegangs des Aussengewindes (Gewindeschneider).

Das Loch 7 im Bauteil 5 (z. B. der Betonwand) für den Dübel 6 kann direkt durch eines der Löcher 8c1 - 8c6 im Metallprofil 8 und die Isolationsschicht 9 in das Gebäudeteil gebohrt werden. Die Distanzschraube 1 wird danach mit dem auf deren Spitze aufgesetzten Dübel 6 durch eines der Löcher 8c1 - 8c6 im Metallprofil 8 und durch die Isolationsschicht 9 hindurch bis zum Anschlag des Dübels 6 in das Loch 7 eingeschoben. Auf der Kunststoffhülle 3 ist eine Skala 3c ausgearbeitet, welche die Einschraubtiefe angibt. Ist die Distanzschraube 1 wie oben beschrieben bis zum Anschlag des Dübels 6 in das Loch 7 eingeschoben, dann muss sich das Metallprofil 8 im entsprechenden Teil der Skala 3c befinden. Auf diese Weise kann der Benutzer einfach und schnell feststellen, ob eine Distanzschraube 1 der richtigen Länge verwendet wird. Durch eine fortgesetzte Schraubbewegung (z. B. mit einem am Kopf 2d angesetzten elektrischen Schraubenzieher) wird nun das vordere Gewinde 2a in den Dübel 6 eingetrieben. Sobald der Gewindeschneider 4b auf das Metallprofil 8 auftrifft, wird ein Gewindegang in das eine gewählte der Löcher 8c1 - 8c6 des Metallprofils 8 geschnitten. Am Ende des Gewindeschneiders 4b folgt das Gewinde 4c des Mantelteils 4 und sorgt für die Fixierung des Metallprofils 8 in einem Abstand zur Betonwand 5.

Aufgrund der flachen Steigung und der grossen Länge des konischen Gewindeschneiders 4b wird das Metallprofil 8 während des Schneidens des Gewindes keinen grossen Kräften ausgesetzt. Dadurch werden Spannungen im Metallprofil 8 vermieden und das Metallprofil 8 wird beim ersten Kontakt mit dem Gewindeschneider 4b auch nicht in die Isolationsschicht 9 gedrückt. Somit werden Verspannungen und Verformungen verhindert und zusätzlich erfolgt die Montage leichtläufiger und dadurch schneller und genauer.

Das beschriebene Ausführungsbeispiel kann in diverser Hinsicht abgewandelt werden. Die konkreten Dimensionsangaben sind nur illustrativer Art und sollen die Erfindung nicht begrenzen.

Es sind zum Beispiel verschieden lange Distanzschrauben 1 für die Montage von verschieden dicken Isolationsschichten 9 vorgesehen. Insbesondere die Kunststoffhülle 3 kann aufgrund der flexiblen Herstellungsweise vielfältig variiert werden und verschiedene Dicken und Formen aufweisen. Die Kunststoffhülle 3 kann die dreh- und zugfeste Verbindung von Mantelteil 4, Kunststoffhülle 3 und Metallstift 2 gewährleisten. Weil sich der aufgespritzte Kunststoff jeder gegebenen Form von Mantelteil 4 und Metallstift 2 anpasst, können die verbindungssichernden Elemente in Mantelteil 4 und Metallstift 2 auch voneinander verschieden ausgeformt sein. Gewinde mit Rinnen sowie Rippen, wie beim beschriebenen Ausführungsbeispiel, können genauso gut verwendet werden, wie fast jede beliebige Anordnung von Vertiefungen, Löchern und/oder Erhebungen, solange diese zusammen in Dreh- und Zugrichtung eine Angriffsfläche bieten. Es kann aber auch zum Beispiel ein Bolzen durch alle zu verbindenden Teile getrieben werden. Eine dreh- und zugfeste Verbindung von Mantelteil 4 und Metallstift 2 kann aber auch ohne die Beihilfe einer Kunststoffhülle 3 realisiert werden.

Das Schraubprofil des Metallstiftkopfs 2d muss nicht aus einem Innensechskant 10 bestehen, sondern kann ebenso gut jede andere drehsichere Form im Innen- oder Aussenprofil annehmen, z. B. Torx®, Phillips oder ein Schlitzprofil. Dies muss nicht technischen Überlegungen entsprechen, sondern kann z. B. aus ästhetischen Gründen vorteilhafter sein. Aus technischen, ästhetischen oder anderen Gründen kann der Metallstiftkopf 2d zum Beispiel auch verschiedene Formen (z. B. abgerundet, abgeflacht, versenkt) annehmen und/oder besondere Oberflächenbeschaffenheiten und Farbgebungen aufweisen. Denkbar sind auch Vorrichtungen, welche das Anbringen von Abdeckungen oder Aufsätzen nach beendeter Montage der Distanzschraube 1 erlauben.

Die Isolationsschicht 9 kann durch Schichten anderer Funktionalitäten (neben der thermischen z. B. auch eine akustische oder elektromagnetische Isolation oder auch Feuerschutzschichten) ersetzt oder ergänzt werden. Sie kann auch ganz weggelassen werden, so dass an ihrer Stelle ein Hohlraum entsteht, welcher für verschiedene Zwecke nutzbar ist.

Das zu befestigende Bauelement 8 muss nicht ein Profil oder eine Platte sein, sondern kann ein beliebiges Element sein. Es muss auch nicht aus Metall bestehen, obwohl das Ausführungsbeispiel sich gerade für metallische Bauelemente besonders gut eignet. Jedes beliebige andere Material kann ebenso befestigt werden, solange sich darin ein Gewinde ausformen lässt. Auch das Bauteil 5 kann aus jedem beliebigen Material bestehen, in welches sich eine Schraube fixieren lässt. Bei geeigneter Wahl von Material des Bauteils 5 und Gewinde 2a der Distanzschraube 1 kann z. B. auch der Dübel 6 weggelassen werden.

Zusammenfassend ist festzustellen, dass die erfindungsgemässe Distanzschraube 1 es erlaubt, insbesondere metallische Bauelemente 8 in einem festen Abstand zu einem Bauteil 5 zu montieren. Dabei wird das Bauelement 8 mit der Distanzschraube 1 verschraubt. Das dazu nötige Gewinde schneidet ein dafür vorgesehener Teil der Distanzschraube 1 im gleichen Arbeitsschritt gleich selber in das Bauelement 8. Die einfache und schnelle Durchsteckmontage ist ein ebenso grosser Vorteil, wie die vergleichsweise kostengünstige Produktion der Distanzschraube 1. Ein schlagender Vorteil ist eine einfache und kostengünstige Anpassung der Dimensionen der Distanzschraube 1. Die Kunststoffhülle 3 kann dabei besonders einfach und kostengünstig in Form, Länge und Durchmesser den Bedürfnissen entsprechend variiert werden. Ausserdem ist die Distanzschraube 1 vor Korrosion geschützt.

## Patentansprüche

1. Vorrichtung (1) zum Befestigen eines Bauelementes (8) in einem Abstand zu einem tragenden Bauteil (5), umfassend
a) einen Stift (2) mit einem vorderen Gewinde (2a) an einem vorderen Endbereich des Stifts (2) und
b) einen Befestigungsabschnitt mit einem hinteren Gewinde, welches
c) einen gegenüber dem vorderen Gewinde (2a) grösseren Querschnitt aufweist, wobei
d) der Befestigungsabschnitt durch einen am Stift (2) drehsicher aufgesetzten Mantelteil aus Metall (4) mit einem Aussengewinde (4c) gebildet ist,
**dadurch gekennzeichnet, dass**
e) eine Kunststoffhülle (3) am Stift (2) vorgesehen ist, welche sich in einen zwischen dem Mantelteil (4) und dem Stift (2) gebildeten Bereich erstreckt.

2. Vorrichtung (1) nach Anspruch 1, **dadurch gekennzeichnet, dass** die Kunststoffhülle (3) maximal bis zu dem vorderen Gewinde (2a) reicht, wobei die Kunststoffhülle (3) eine starre Verbindung zwischen Mantelteil (4) und Stift (2) schafft.

3. Vorrichtung (1) nach Anspruch 1 oder 2, **dadurch gekennzeichnet, dass** zwischen dem vorderen (2a) und dem hinteren Gewinde (4c) ein Gewindeschneider (4b) am Mantelteil (4) ausgebildet ist.

4. Vorrichtung (1) nach Anspruch 3, **dadurch gekennzeichnet, dass** der Gewindeschneider (4b) eine konische Form aufweist und eine Länge hat, die grösser als diejenige des hinteren Gewindes (4c) ist, vorzugsweise eine Länge, die mindestens zweimal so gross wie diejenige des hinteren Gewindes (4c) ist.

5. Vorrichtung (1) nach einem der Ansprüche 2 bis 4, **dadurch gekennzeichnet, dass** die Kunststoffhülle (3) länger als der Mantelteil (4) ist.

6. Vorrichtung (1) nach einem der Ansprüche 2 bis 5, **dadurch gekennzeichnet, dass** in Längsrichtung betrachtet ein mantelseitiger Übergang zwischen dem Mantelteil (4) und der Kunststoffhülle (3) stufenlos ist.

7. Vorrichtung (1) nach einem der Ansprüche 2 bis 6, **dadurch gekennzeichnet, dass** der Stift (2) im Bereich des Mantelteils (4) ein Gewinde (2c) zur Sicherung einer starren Verbindung mit der Kunststoffhülle (3) aufweist und dass das Gewinde (2c) in Längsrichtung des Stifts, vorzugsweise durch mindestens eine Rinne (2e), unterbrochen ist.

8. Vorrichtung (1) nach einem der Ansprüche 1 bis 7, **dadurch gekennzeichnet, dass** das hintere Gewinde (4c) nicht mehr als fünf Windungsumläufe hat.

9. Vorrichtung (1) nach einem der Ansprüche 3 bis 8, **dadurch gekennzeichnet, dass** der Gewindeschneider (4b) durch ein Gewinde gebildet ist, welches in Längsrichtung des Stifts (2) in mehrere, insbesondere vier Sektoren, unterteilt ist.

10. Vorrichtung (1) nach einem der Ansprüche 3 bis 9, **dadurch gekennzeichnet, dass** der Gewindeschneider (4b) eine Mehrzahl von Schneidzähnen (4d) aufweist, deren Freiflächen (4i) rampenförmig aus einem glatten Bereich des Mantelteils (4) herausstehen.

11. Vorrichtung (1) nach einem der Ansprüche 1 bis 10, **dadurch gekennzeichnet, dass** zwischen dem Mantelteil (4) und dem Kopf (2d) des Stifts (2) ein Teil der Kunststoffhülle (3) liegt.

12. Vorrichtung (1) nach einem der Ansprüche 2 bis 11, **dadurch gekennzeichnet, dass** sie einen Kunststoffdübel (6) für das vordere Gewinde (2a) umfasst, wobei eine Länge des Kunststoffdübels (6) mindestens so gross ist, dass der Kunststoffdübel (6) einen von der Kunststoffhülle (3) nicht abgedeckten Bereich des Stifts (2) abdeckt.

13. Vorrichtung (1) nach einem der Ansprüche 1 bis 12, **dadurch gekennzeichnet, dass** der Mantelteil (4) eine Innenseite mit in Längsrichtung verlaufenden Rippen (4f) aufweist.

14. Vorrichtung nach einem der Ansprüche 1 bis 13, **dadurch gekennzeichnet, dass** sie ein Metallprofil (8) umfasst, welches mit mindestens zwei Löchern (8c1 - 8c6) versehen ist, welche einen Durchmesser haben, der kleiner ist als der maximale Aussendurchmesser des Gewindeschneiders und grösser ist als der minimale Durchmesser des Befestigungsabschnitts auf dem Boden des Gewindegangs des Aussengewindes (4c).

15. Gebäudeteil mit
a) einem tragenden Bauteil (5),
b) einer Isolationsschicht (9), welche am tragenden Bauteil fixiert (5) ist,
c) einem Metallprofil (8), welches aussenseitig an der Isolationsschicht (9) gehalten ist, und
d) einer Vorrichtung (1) nach einem der Ansprüche 1 bis 14, welche das Metallprofil (8) durch die Isolationsschicht (9) hindurch am tragenden Bauteil (5) befestigt,
e) wobei das vordere Gewinde (2c) eine Verankerung der Vorrichtung (1) im tragenden Bauteil (5) sicherstellt und das hintere Gewinde (4c) eine Verbindung mit dem Metallprofil (8) schafft, so dass dieses aussenseitig an der Isolationsschicht (9) gehalten ist.

## Claims

1. Device (1) for securing a construction element (8) at a distance from a supporting component (5), comprising
a) a pin (2) with a front thread (2a) on a front end region of the pin (2), and
b) a securing portion with a rear thread which
c) has a larger cross section than the front thread (2a), wherein
d) the securing portion is formed by a casing part which is mounted on the pin (2) in a manner secure against rotation, is made from metal (4) and has an external thread (4c),
**characterized in that**
e) a plastics covering (3) is provided on the pin (2), said plastics covering expending into a region formed between the casing part (4) and the pin (2).

2. Device (1) according to Claim 1, **characterized in that** the plastics covering (3) reaches at maximum as far as the front thread (2a), the plastics covering (3) providing a rigid connection between the casing part (4) and pin (2).

3. Device (1) according to Claim 1 or 2, **characterized in that** a thread cutter (4b) is formed on the casing part (4) between the front thread (2a) and the rear thread (4c).

4. Device (1) according to Claim 3, **characterized in that** the thread cutter (4b) has a conical shape and is of a length which is greater than that of the rear thread (4c), preferably of a length which is at least twice the size of that of the rear thread (4c).

5. Device (1) according to one of Claims 2 to 4, **characterized in that** the plastics covering (3) is longer than the casing part (4).

6. Device (1) according to one of Claims 2 to 5, **characterized in that** a casing-side transition between the casing part (4) and the plastics covering (3) is stepless, as viewed in the longitudinal direction.

7. Device (1) according to one of Claims 2 to 6, **characterized in that** the pin (2) has, in the region of the casing part (4), a thread (2c) for ensuring a rigid connection with the plastics covering (3), and **in that** the thread (2c) is interrupted in the longitudinal direction of the pin, preferably by at least one channel (2e).

8. Device (1) according to one of Claims 1 to 7, **characterized in that** the rear thread (4c) has no more than five turn revolutions.

9. Device (1) according to one of Claims 3 to 8, **characterized in that** the thread cutter (4b) is formed by a thread which is divided in the longitudinal direction of the pin (2) into a plurality of, in particular four, sectors.

10. Device (1) according to one of Claims to 9, **characterized in that** the thread cutter (4b) has a plurality of cutting teeth (4d), the free surfaces (4i) of which protrude in a ramp-shaped manner from a smooth region of the casing part (4).

11. Device (1) according to one of Claims 1 to 10, **characterized in that** part of the plastics covering (3) is located between the casing part (4) and the head (2d) of the pin (2).

12. Device (1) according to one of Claims 2 to 11, **characterized in that** said device comprises a plastics dowel (6) for the front thread (2a), a length of the plastics dowel (6) being at least of a size such that the plastics dowel (6) covers a region of the pin (2) that is not covered by the plastics covering (3).

13. Device (1) according to one of Claims 1 to 12, **characterized in that** the casing part (4) has an inner side with ribs (4f) running in the longitudinal direction.

14. Device according to one of Claims 1 to 13, **characterized in that** said device comprises a metal profile (8) which is provided with at least two holes (8c1 - 8c6) which are of a diameter which is smaller than the maximum outside diameter of the thread cutter and larger than the minimum diameter of the securing portion on the thread base of the external thread (4c).

15. Building part with
a) a supporting component (5),
b) an insulating layer (9) which is fixed on the supporting component (5),
c) a metal profile (8) which is held on the outside of the insulating layer (9), and
d) a device (1) according to one of Claims 1 to 14, which device secures the metal profile (8) through the insulating layer (9) to the supporting component (5),
e) the front thread (2c) ensuring that the device (1) is anchored in the supporting component (5), and the rear thread (4c) providing a connection to the metal profile (8) such that the latter is held on the outside of the insulating layer (9).

## Revendications

1. Dispositif (1) de fixation d'un élément de construction (8) à une distance d'un composant portant (5), comprenant
a) une tige (2) avec un filet antérieur (2a) sur une région d'extrémité avant de la tige (2) et
b) une partie de fixation avec un filet postérieur, qui
c) présente une section transversale plus grande par rapport au filet antérieur (2a), dans lequel
d) la partie de fixation est formée par une pièce de gaine en métal (4) avec un filet extérieur (4c) calée en rotation sur la tige (2),
**caractérisé en ce que**
e) il est prévu sur la tige (2) une douille de matière plastique (3), qui s'étend dans une région formée entre la pièce de gaine (4) et la tige (2).

2. Dispositif (1) selon la revendication 1, **caractérisé en ce que** la douille de matière plastique (3) s'étend au maximum jusqu'au filet antérieur (2a), dans lequel la douille de matière plastique (3) assure une liaison rigide entre la pièce de gaine (4) et la tige (2).

3. Dispositif (1) selon la revendication 1 ou 2, **caractérisé en ce qu'**un outil à fileter (4b) est réalisé sur la pièce de gaine (4) entre le filet antérieur (2a) et le filet postérieur (4c).

4. Dispositif (1) selon la revendication 3, **caractérisé en ce que** l'outil à fileter (4b) présente une forme conique et possède une longueur qui est plus grande que celle du filet postérieur (4c), de préférence une longueur qui est au moins deux fois plus grande que celle du filet postérieur (4c).

5. Dispositif (1) selon l'une quelconque des revendications 2 à 4, **caractérisé en ce que** la douille de matière plastique (3) est plus longue que la pièce de gaine (4).

6. Dispositif (1) selon l'une quelconque des revendications 2 à 5, **caractérisé en ce que**, considéré dans la direction longitudinale, une transition côté gaine entre la pièce de gaine (4) et la douille de matière plastique (3) est continue.

7. Dispositif (1) selon l'une quelconque des revendications 2 à 6, **caractérisé en ce que** la tige (2) présente dans la région de la pièce de gaine (4) un filet (2c) destiné à assurer une liaison rigide avec la douille de matière plastique (3) et **en ce que** le filet (2c) est interrompu dans la direction longitudinale de la tige, de préférence par au moins une rainure (2e).

8. Dispositif (1) selon l'une quelconque des revendications 1 à 7, **caractérisé en ce que** le filet postérieur (4c) ne comporte pas plus de cinq spires.

9. Dispositif (1) selon l'une quelconque des revendications 3 à 8, **caractérisé en ce que** l'outil à fileter (4b) est formé par un filet, qui est divisé dans la direction longitudinale de la tige (2) en plusieurs secteurs, en particulier en quatre secteurs.

10. Dispositif (1) selon l'une quelconque des revendications 3 à 9, **caractérisé en ce que** l'outil à fileter (4b) présente une pluralité de dents de coupe (4d), dont les faces libres (4i) s'élèvent en forme de rampes à partir d'une région lisse de la pièce de gaine (4).

11. Dispositif (1) selon l'une quelconque des revendications 1 à 10, **caractérisé en ce qu'**une partie de la douille de matière plastique (3) est située entre la pièce de gaine (4) et la tête (2d) de la tige (2).

12. Dispositif (1) selon l'une quelconque des revendications 2 à 11, **caractérisé en ce qu'**il comprend une cheville de matière plastique (6) pour le filet antérieur (2a), dans lequel une longueur de la cheville de matière plastique (6) présente au moins une grandeur telle que la cheville de matière plastique (6) recouvre une région de la tige (2) qui n'est pas recouverte par la douille de matière plastique (3).

13. Dispositif (1) selon l'une quelconque des revendications 1 à 12, **caractérisé en ce que** la pièce de gaine (4) présente une face intérieure avec des nervures (4f) s'étendant en direction longitudinale.

14. Dispositif (1) selon l'une quelconque des revendications 1 à 13, **caractérisé en ce qu'**il comprend un profilé métallique (8), qui est doté d'au moins deux trous (8c1 - 8c6), qui présentent un diamètre qui est plus petit que le diamètre extérieur maximal de l'outil à fileter et qui est plus grand que le diamètre minimal de la partie de fixation sur le fond du pas de filet du filet extérieur (4c).

15. Partie de bâtiment avec
a) un composant portant (5),
b) une couche d'isolation (9), qui est fixée sur le composant portant (5),
c) un profilé métallique (8), qui est maintenu côté extérieur sur la couche d'isolation (9), et
d) un dispositif (1) selon l'une quelconque des revendications 1 à 14, qui fixe le profilé métallique (8) à travers la couche d'isolation (9) sur le composant portant (5),
e) dans laquelle le filet antérieur (2c) assure un ancrage du dispositif (1) dans le composant portant (5) et le filet postérieur (4c) procure une liaison avec le profilé métallique (8), de telle manière que celui-ci soit maintenu côté extérieur sur la couche d'isolation (9).
